(19) Europäisches Patentamt / European Patent Office / Office européen des brevets

(11) EP 2 725 687 A1

(12) EUROPÄISCHE PATENTANMELDUNG

(43) Veröffentlichungstag:
30.04.2014  Patentblatt 2014/18

(51) Int Cl.:
*H02K 1/27* [(2006.01)]

(21) Anmeldenummer: 12190077.3

(22) Anmeldetag: 26.10.2012

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder: **Fick, Michael**
**97656 Sondernau (DE)**

(54) **Permanenterregte Synchronmaschine**

(57) Die Erfindung betrifft eine permanenterregte Synchronmaschine (1) mit
- einem Stator (2), der ein in Nuten (13) angeordnetes Wicklungssystem (12) aufweist,
- einem Rotor (3), der von dem Stator (2) durch einen Luftspalt (15) beabstandet ist,

wobei der Rotor (3) eine, um eine Rotationsachse (A) vorgegebene Rotationsrichtung (R) aufweist,
wobei in Rotationsrichtung (R) voneinander beabstandete Polschuhe (4) angeordnet sind,
wobei zwischen den Polschuhen (4) jeweils erste Permanentmagnete (5) mit, bezüglich der Rotationsachse (A) tangentiale Magnetisierungsrichtung (8) vorgesehen sind,
wobei der Abstand benachbarter erster Permanentmagnete (5) einer Polteilung $\tau_p$ entspricht,
wobei die tangentiale Magnetisierungsrichtung (8) benachbarter, zwischen den Polschuhen angeordneter erster Permanentmagnete (5) entgegen gesetzt ist,
wobei zusätzliche zweite Permanentmagnete (6) radial an den Polschuhen (4) positioniert sind, die eine radiale Magnetisierungsrichtung (9) bezüglich der Rotationsachse (A) aufweisen,
wobei der Rotor (4) von einer magnetisch leitfähigen Abdeckung umgeben ist.

FIG 1

EP 2 725 687 A1

**Beschreibung**

Die Erfindung betrifft eine permanenterregte Synchronmaschine mit einem Stator, der ein in Nuten angeordnetes Wicklungssystem aufweist und einem Rotor, der von dem Stator durch einen Luftspalt beabstandet ist und Permanentmagnete aufweist.

Aus der DE 101 33 654 A1 ist eine elektrische permanente Synchronmaschine mit einem Stator und einem Rotor bekannt, wobei der Stator eine dreiphasige Drehstromwicklung mit einer mittleren Spulenweite aufweist und der Rotor mit Permanentmagneten versehen ist, wobei der Rotor die Polpaarzahl 2p mit der Polteilungsweite $\tau_P$ aufweist, und sich ein Teilungsverhältnis $\tau_{SP}$ zu $\tau_P$ von größer zu 2,5 ergibt. Dabei ist für die Anordnung der Permanentmagnete die Flusskonzentrationsanordnung gewählt.

Aus der EP 0 126 997 A1 ist ein elektrischer Antrieb mit einem Rotor bekannt, dessen Permanentmagnete in einer Sammleranordnung angeordnet sind.

Ausgehend davon liegt der Erfindung die Aufgabe zugrunde, eine permanenterregte Synchronmaschine zu schaffen, bei der gegenüber den im genannten Stand der Technik ausgeführten Anordnung eine weitere Verbesserung der Luftspaltinduktion erreicht wird.

Die Lösung der gestellten Aufgabe gelingt durch eine permanenterregte Synchronmaschine mit

- einem Stator, der ein in Nuten angeordnetes Wicklungssystem aufweist,
- einem Rotor, der von dem Stator durch einen Luftspalt beabstandet ist,

wobei der Rotor eine, um eine Rotationsachse vorgegebene Rotationsrichtung aufweist,
wobei in Rotationsrichtung voneinander beabstandete Polschuhe angeordnet sind,
wobei zwischen den Polschuhen jeweils erste Permanentmagnete mit, bezüglich der Rotationsachse tangentiale Magnetisierungsrichtung vorgesehen sind,
wobei der Abstand benachbarter erster Permanentmagnete einer Polteilung $\tau_P$ entspricht,
wobei die tangentiale Magnetisierungsrichtung benachbarter, zwischen den Polschuhen angeordneter erster Permanentmagnete entgegen gesetzt ist,
wobei zusätzliche zweite Permanentmagnete radial an den Polschuhen positioniert sind, die eine radiale Magnetisierungsrichtung bezüglich der Rotationsachse aufweisen,
wobei der Rotor von einer magnetisch leitfähigen Abdeckung umgeben ist.

Durch die erfinderische Kombination und Anordnung aus einem ersten Permanentmagnet mit einer Magnetisierungsrichtung bzw. Flussrichtung tangential zu einer Rotationsachse und einem zweiten Permanentmagneten mit bezüglich der Rotationsachse radialer Magnetisierungsrichtung kann bei gleicher magnetischer Induktion ein größerer Wirkdurchmesser der dynamoelektrischen Maschine mit einem Außenläufer erreicht werden. Damit wird eine maximale Flusskonzentration in bestehendem Bauraum der permanenterregten Synchronmaschine geschaffen.

Um bei Verwendung der ersten Permanentmagnete auf standardisierte Größe zurückgreifen zu können, ist der Zwischenraum zwischen zwei benachbarten Polschuhen vorzugsweise quaderförmig, im Querschnitt betrachtet also rechteckförmig ausgeführt, so dass quaderförmige Permanentmagnete als erste Permanentmagnete vorteilhafterweise dort eingesetzt werden können.

Um einen definierten Anlagepunkt innerhalb des Blechpakets des Rotors zu schaffen, und somit die Montage zu erleichtern, weisen die Polschuhe, insbesondere zum Luftspalt der dynamoelektrischen Maschine radiale Anlagenflächen auf, die bei einer mechanischen Eigenverspannung des Gesamtsystems (Polschuhe, erster Permanentmagnet, zweiter Permanentmagnet, magnetisch leitfähige Abdeckung) zur mechanischen Eigenverspannung dieser Einzelelemente des Rotors beitragen. Damit werden Spalte zwischen Polschuhen und Permanentmagneten vermieden, die die magnetische Leitfähigkeit der Gesamtanordnung beeinträchtigen.

Vorteilhafterweise dient als magnetisch leitfähige Abdeckung ein weichmagnetisches Rohr, das den magnetischen Rückschluss der ersten und zweiten Permanentmagnete gewährleistet.

Um den Raum zwischen zwei Polschuhen quaderförmig gestalten zu können, sind bei einer rotatorischen dynamoelektrischen Maschine die Polschuhe dementsprechend mit einer trapezförmigen Grundstruktur auszuführen.

Um den durch das Wicklungssystem erzeugten Fluss des Stators durch den geblechten Polschuh zu lenken, sind besonders geometrische Abmessungen vorteilhaft, die die Magnetdicke B der ersten Permanentmagnete und der Dicke b der zweiten Permanentmagnete berücksichtigt. Dabei ist besonders ein Verhältnis von

$$B > b \geq \frac{B}{2}$$ vorteilhaft. Die Erfindung sowie weitere vorteilhafte Ausgestaltungen der Erfindung sind den prinzipiell dargestellten Ausführungsformen zu entnehmen. Darin zeigen:

FIG 1     eine perspektivische Darstellung eines Rotors einer Außenläufermaschine,
FIG 2     einen Teilquerschnitt des Rotors,
FIG 3     einen weiteren Teilquerschnitt der die Magnetisierungsrichtungen zeigt,
FIG 4     einen Teilquerschnitt von Rotor und Stator.

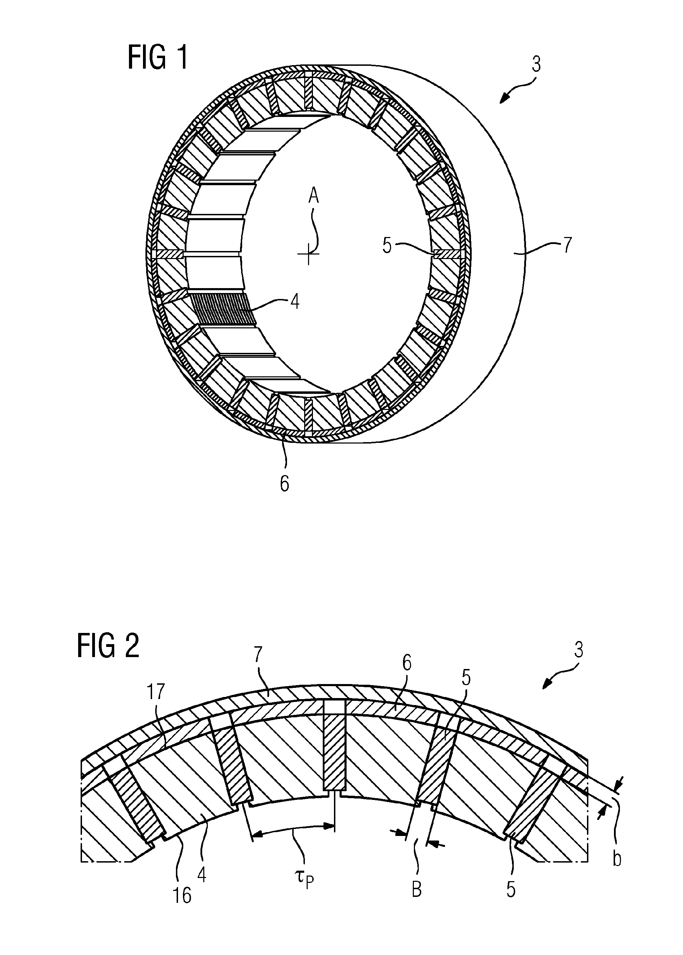

FIG 1 zeigt einen Rotor 3 einer permanenterregten Synchronmaschine 1, die als Außenläufermaschine ausgeführt ist. Der Rotor 3 ist dabei 24-polig ausgeführt und zeigt eine Rotationsachse A, um die er im Betrieb rotiert. Der Rotor 3 ist dabei in Umfangsrichtung betrachtet, also in seiner Rotationsrichtung R, aus Polschuhen 4 aufgebaut, die in Richtung der Rotationsachse, also axial betrachtet, geblecht ausgeführt sind. Zwischen den Polschuhen 4, sind, wie auch FIG 2 bis FIG 4 zeigt, erste Permanentmagnete 5 positioniert, die in Richtung eines Luftspalts 15 der permanenterregten Synchronmaschine 1 durch Anlageflächen 14 der Polschuhe 4 positioniert und gehalten sind. Radial schließt sich nach außen an die Polschuhe 4 ein zweiter Permanentmagnet 6 an, der eine radiale Magnetisierung aufweist. Die Abstände der ersten Permanentmagnete $\tau_P$ bilden das Polteilungsverhältnis. Die Breite B der ersten Permanentmagnete 5 ist vorzugsweise, radial betrachtet, gleichbleibend, so dass wirtschaftlich günstig herzustellende quaderförmige erste Permanentmagnete 5 eingesetzt werden können.

Um den durch das Wicklungssystem, beispielsweise durch Zahnspulen 12 erzeugten Fluss eines Stators 2 durch den geblechten Polschuh 4 zu lenken, sind besonders geometrische Abmessungen vorteilhaft, die die Magnetdicke B der ersten Permanentmagnete 5 und der Dicke b der zweiten Permanentmagnete 6 berücksichtigt. Dabei ist besonders ein Verhältnis von

$$B > b \geq \frac{B}{2}$$ vorteilhaft.

Wirtschaftlich günstig herzustellende quaderförmige erste Permanentmagnete 5 beinhaltet selbstverständlich bei einer rotatorischen Maschinen, dass demnach die Polschuhe 4 in ihrer Grundform trapezförmig auszugestalten sind. D.h., die Breite eines Polschuhs 4 nimmt bei einem Außenläufer radial zu. Die dem Luftspalt 15 zugewandten Flächen 16 und nach außen weisenden Flächen 17 der Polschuhe 4 sind vorteilhafterweise gekrümmt ausgeführt. Damit passen sich diese Flächen 16, 17 dem Durchmesser bzw. dem Luftspalt 15 der permanenterregten Synchronmaschine 1 an. Dies führt zu einer Homogenisierung des Luftspaltfeldes.

In einer anderen, kostengünstigeren Form ist zumindest eine der Flächen 16, 17 eines Polschuhs 4 eben ausgestaltet. Dabei vereinfachen sich die Stanzwerkzeuge und es sind auch bei den zweiten Permanentmagneten 6 leichter quaderförmige Permanentmagnete einzusetzen, insbesondere wenn die Flächen 17 eben ausgeführt sind.

Radial an den Polschuh 4 schließt sich der zweite Permanentmagnet 6 an, der eine radiale Magnetisierungsrichtung 9 aufweist. Um die Gesamtanordnung ist vorzugsweise ein weichmagnetisches Rohr 7 angeordnet, das die zweiten Permanentmagnete 6, als auch den gesamten Rotor 3 zusammenhält. Dies trägt zu einer mechanischen Eigenverspannung bei, und bildet einen magnetischen Rückschluss der im Rotor 3 erfindungsgemäß angeordneten ersten und zweiten Permanentmagnete 5, 6.

Bei der oben erwähnten kostengünstigeren Variante ist dabei dann vorteilhafterweise die Innenfläche des Rohres 7 korrespondierend zu der Anordnung der zweiten Permanentmagnete 6 polygonförmig ausgeführt.

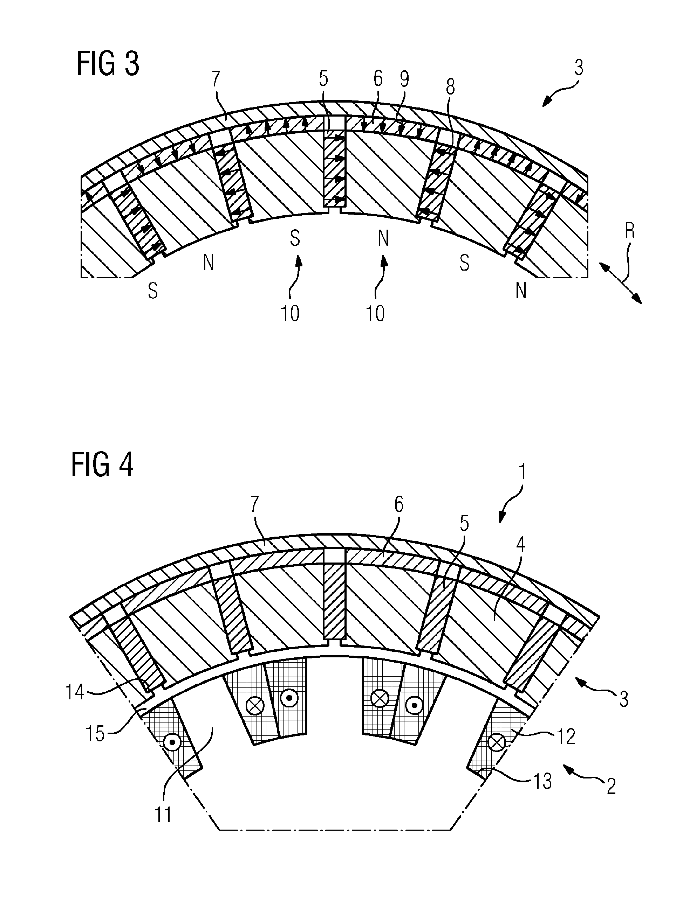

FIG 3 zeigt in Ergänzung zu FIG 2 die Ausprägung der magnetischen Pole 10, als auch die Magnetisierungsrichtungen 8, 9 der Permanentmagnete 5, 6.

FIG 4 zeigt in einem Teilquerschnitt sowohl den bisher dargestellten Rotor 3, als auch nunmehr einen beispielhaft dargestellten Stator 2 mit seinen Statorzähnen 11, und die dadurch gebildeten Nuten 13, in denen ein Wicklungssystem angeordnet ist, das in diesem speziellen Fall durch Zahnspulen 12 ausgebildet ist. Die Zahnspulen 12 umgreifen dabei jeweils einen Statorzahn 11. Durch den erfindungsgemäßen Aufbau eines Rotors 3 und damit einer permanenterregten Synchronmaschine 1 wird nunmehr eine verbesserte Flusskonzentration der Permanentmagnete 5, 6 im Luftspalt 15 erreicht.

In dieser Anordnung können als Permanentmagnete 5, 6 vorzugsweise auch kostengünstige Ferritmagnete eingesetzt werden, da durch die Sammleranordnung und die Flusskonzentration die erforderliche Luftspaltinduktion im Luftspalt 15 der permanenterregten Synchronmaschine 1 erreicht wird.

Selbstverständlich kann der erfinderische Gedanke ohne weiteres auf rotatorische Innenläufermotoren oder auch Linearmotoren übertragen werden.

Diese Synchronmaschinen 1 eigenen sich für sämtliche Anwendungen entweder als Direktantrieb einer Arbeitsmaschine oder auch als Antrieb, der eine Arbeitsmaschine über ein Getriebe antreibt.

Als Arbeitsmaschinen eigenen sich Walzen von Produktionsmaschinen wie sie beispielsweise in der Papierindustrie oder der Stahlverarbeitung eingesetzt werden.

Ebenso sind derartige Synchronmaschinen 1 auch als direkt angetriebene Generatoren, beispielsweise in der Windenergieerzeugung einsetzbar. Ebenso sind derartige Synchronmotoren als Antrieb in der Fahrzeugtechnik, insbesondere als Radnabenmotoren einsetzbar.

**Patentansprüche**

1. Permanenterregte Synchronmaschine (1) mit

   - einem Stator (2), der ein in Nuten (13) angeordnetes Wicklungssystem (12) aufweist,
   - einem Rotor (3), der von dem Stator (2) durch einen Luftspalt (15) beabstandet ist,

   wobei der Rotor (3) eine, um eine Rotationsachse (A) vorgegebene Rotationsrichtung (R) aufweist, wobei in Rotationsrichtung (R) voneinander beabstandete Polschuhe (4) angeordnet sind, wobei zwischen den Polschuhen (4) jeweils erste Permanentmagnete (5) mit, bezüglich der Rotationsachse (A) tangentiale Magnetisierungsrichtung (8) vorgesehen sind,

wobei der Abstand benachbarter erster Permanentmagnete (5) einer Polteilung $\tau_P$ entspricht,
wobei die tangentiale Magnetisierungsrichtung (8) benachbarter, zwischen den Polschuhen angeordneter erster Permanentmagnete (5) entgegen gesetzt ist,
wobei zusätzliche zweite Permanentmagnete (6) radial an den Polschuhen (4) positioniert sind, die eine radiale Magnetisierungsrichtung (9) bezüglich der Rotationsachse (A) aufweisen,
wobei der Rotor (4) von einer magnetisch leitfähigen Abdeckung umgeben ist.

2. Permanenterregte Synchronmaschine (1) nach Anspruch 1,
**dadurch gekennzeichnet, dass** die Polschuhe (4) trapezförmig ausgeführt sind, derart, dass sich zwischen den Polschuhen (4) ein nahezu rechteckförmiger Zwischenraum einstellt.

3. Permanenterregte Synchronmaschine (1) nach einem der vorhergehenden Ansprüche, **dadurch gekennzeichnet, dass** die Polschuhe (4) zumindest für die ersten Permanentmagnete (5) radiale Anlageflächen zur Positionierung und Eigenverspannung aufweisen.

4. Permanenterregte Synchronmaschine (1) nach einem der vorhergehenden Ansprüche, **dadurch gekennzeichnet, dass** die magnetisch leitfähige Abdeckung ein weichmagnetisches Rohr (7) ist.

5. Permanenterregte Synchronmaschine (1) nach einem der vorhergehenden Ansprüche, **dadurch gekennzeichnet, dass** die Breite (B) des ersten Permanentmagneten (5) und die Breite (b) des zweiten Permanentmagneten (6) nach folgender Beziehung gewählt sind: $B > b \geq \dfrac{B}{2}$ .

6. Permanenterregte Synchronmaschine (1) nach einem der vorhergehenden Ansprüche, **dadurch gekennzeichnet, dass** der Rotor (3) als Außenläufer ausgebildet ist.

7. Permanenterregte Synchronmaschine (1) nach einem der vorhergehenden Ansprüche, **dadurch gekennzeichnet, dass** zumindest die ersten Permanentmagneten (5) Ferritmagnete sind.

FIG 1

FIG 2

FIG 3

FIG 4

Europäisches
Patentamt

European
Patent Office

Office européen
des brevets

**EUROPÄISCHER RECHERCHENBERICHT**

**Nummer der Anmeldung**

EP 12 19 0077

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X<br>Y | EP 2 293 421 A2 (YASKAWA DENKI SEISAKUSHO KK [JP]) 9. März 2011 (2011-03-09)<br>* Absätze [0078] - [0082], [0093]; Abbildungen 12,13 *<br>----- | 1,2,4-7<br><br>3 | INV.<br>H02K1/27 |
| Y | JP 2005 057854 A (HONDA MOTOR CO LTD) 3. März 2005 (2005-03-03)<br>* Abbildung 3 *<br>----- | 3 | |
| X | US 2012/228979 A1 (PETRO JOHN P [US] ET AL) 13. September 2012 (2012-09-13)<br>* Absätze [0138] - [0142]; Abbildungen 22C,22D,23A *<br>----- | 1,2,4-7 | |
| A | WO 2011/076740 A1 (HOEGANAES AB PUBL [SE]; PENNANDER LARS-OLOV [SE]; NORD GOERAN [SE]) 30. Juni 2011 (2011-06-30)<br>* Abbildung 6b *<br>----- | 1,3 | |

**RECHERCHIERTE SACHGEBIETE (IPC)**

H02K

Der vorliegende Recherchenbericht wurde für alle Patentansprüche erstellt

| Recherchenort | Abschlußdatum der Recherche | Prüfer |
|---|---|---|
| Den Haag | 17. Mai 2013 | Zoukas, Eleftherios |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 19 0077

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-05-2013

| Im Recherchenbericht angeführtes Patentdokument | | Datum der Veröffentlichung | Mitglied(er) der Patentfamilie | | Datum der Veröffentlichung |
|---|---|---|---|---|---|
| EP 2293421 | A2 | 09-03-2011 | CN | 102013744 A | 13-04-2011 |
| | | | EP | 2293421 A2 | 09-03-2011 |
| | | | JP | 2011078298 A | 14-04-2011 |
| | | | US | 2011057533 A1 | 10-03-2011 |
| JP 2005057854 | A | 03-03-2005 | KEINE | | |
| US 2012228979 | A1 | 13-09-2012 | US | 2012228979 A1 | 13-09-2012 |
| | | | WO | 2012122556 A1 | 13-09-2012 |
| WO 2011076740 | A1 | 30-06-2011 | AU | 2010334933 A1 | 12-07-2012 |
| | | | CA | 2785084 A1 | 30-06-2011 |
| | | | CN | 102754309 A | 24-10-2012 |
| | | | EP | 2517333 A1 | 31-10-2012 |
| | | | KR | 20120106984 A | 27-09-2012 |
| | | | TW | 201141013 A | 16-11-2011 |
| | | | WO | 2011076740 A1 | 30-06-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10133654 A1
- EP 0126997 A1